# EUROPEAN PATENT APPLICATION

(11) **EP 0 675 271 A1**
(43) Date of publication of application: **04.10.1995**
(21) Application number: 94302213.7
(22) Date of filing: 28.03.1994
(51) Int. Cl.: F02B 19/12, F02B 19/10

(54) **A pre-chamber leanburn engine**

(71) Applicant: Weaving, John Harold, Solihull, West Midlands B94 6EN (GB)
(72) Inventor: Weaving, John Harold, Solihull, West Midlands B94 6EN (GB)

(57) **Abstract**

A spark ignition internal combustion piston engine principally for use on a passenger vehicle, normally a 4 stroke using petrol, which is characterized by a two zone combustion chamber system, consisting of a large 'penthouse' shaped combustion chamber (11) served with four valves. The second zone (15) is a small pre-chamber situated at the apex of the main combustion chamber and connected to it through a small passage (10). A principal objective is low atmospheric pollution and for the majority of driving the main chamber is fed with a homogeneous mixture circa 20/1 air/fuel ratio or leaner.

The small pre-chamber has an independant fuel enrichment injector (16) to give an easily ignitable charge. The burning jet from the pre-chamber ignites the charge in the main chamber. Atmospheric pollutants are reduced by operating largely without throttling. For maximum power a stoichiometric mixture is used and pollutants reduced with a 3-way catalyst and preferrable a drive-by-wire system is employed.

## Description

The invention relates to a spark ignition internal combustion engine principally for use in a vehicle for passenger and commercial transport and normally using petrol as a fuel.

The unique design is preferably incorporated in a four-stroke spark ignition piston engine but is also applicable to a two-stroke type. The total system incorporates a 3-way catalyst used in a unique manner and preferably a 'drive-by-wire' power unit management system. The concept is to reduce all the objectionable exhaust gas atmospheric pollutants including carbon dioxide (the so called 'greenhouse effect' gas) without loss of power from the engine compared with present emission controlled engines which do nothing to reduce carbon dioxide emissions.

The principle on which the engine works involves a small pre-chamber connected to a large main chamber. It has some similarities in lay-out to an IDI (Indirect injection) Diesel Engine and the many forms of stratified charge engine. It differs from these in that it is a homogeneous charge engine with excellent leanburn characteristics. As is well known a very lean air/fuel ratio mixture (circa 20/1) reduces the pollutant nitric oxide which is formed during the process of combustion in an engine dramatically, due to the lower temperature of combustion.

Unfortunately it also slows down the rate of burning in the combustion chamber with attendant loss of efficiency. It is also difficult to ignite a lean charge with the conventional spark energy. Both these disadvantages are overcome in this invention, combustion is speeded up by the induction of the charge through two inlet valves enabling the direction and/or velocity of the flows to be varied in order to produce high intensity of smallscale turbulence in the main gas flow stream which has a 'tumble' flow characteristic induced by the port design.

The burnt gas is exhausted through two exhaust valves on the opposite side of the chamber.

The principle is differentiated from previous so-called stratified charge engines and "Torch Ignited Engines" principally in the fact that these engines are two-valve types with entirely different flow patterns.

An important objective of the invention is to maintain full throttle operation to the lowest speed and load possible as is the practice with diesel engines. By this means efficiency is improved and carbon dioxide and nitric oxide emissions considerably reduced.

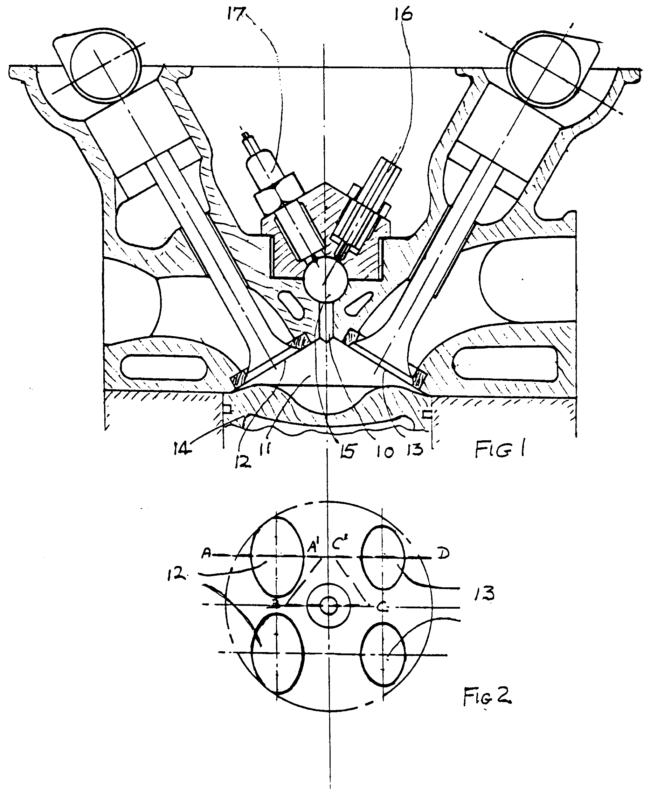

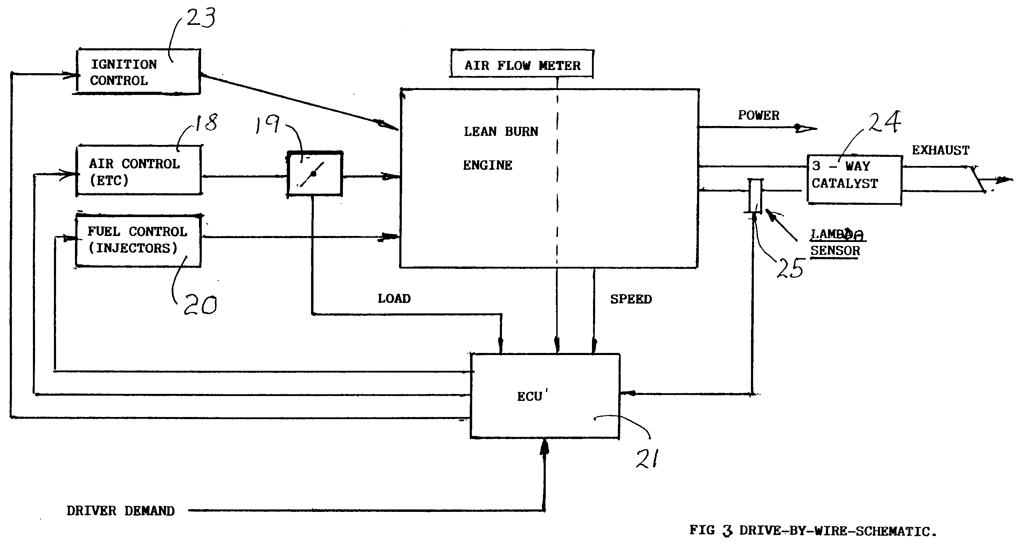

These conditions are achieved with the novel construction shown in Fig 1 and 2. Fig 1 is a section staggered as indicated in plan view Fig 2 namely line AA'BCC'D. It consists of a combustion chamber that has two separated zones connected by a narrow passage (10). The larger of the combustion chambers :(11) is fed with a petrol/air mixture through 2 separate inlet valves (12) and exhausted through one or more but preferably two further valves (13) thus making a 3 or 4 valve engine. The shape of the combustion chamber is of penthouse or part-spherical form contained in the cylinder head and completed with a domed or flat piston (14). The small pre-chamber (15) preferably about 5% of the volume of the main chamber is supplied with fuel through a separate fuel or fuel and air injector; alternatively a small valve through which is fed a rich in fuel air/fuel mixture. The quantity of fuel to the pre-chamber is so proportioned to obtain a final mixture strength close to stoichiometric (14.8 air/fuel ratio). This "final" mixture strength is obtained at the time of spark arrival at the sparking plug (17).

The method of operation in the leanburn condition for minimising pollution is for a homogeneous lean air/fuel ratio (circa 20/1) mixture to be inducted into the main chamber; during the subsequent compression stroke a small quantity of this lean mixture is forced into the pre-chamber where it is enriched with the required amount of extra fuel from the injector or small valve to give an easily ignitable mixture circa 14.8 air/fuel ratio, namely stoichiometric.

In operation the sparking plug ignites the mixture in the pre-chamber and the pressure rapidly rises above that in the main chamber and a flame of burning fuel is forced into and across the main chamber thus igniting the weak mixture which would not ignite consistently or at all with a normal electric spark. The flow-pattern is an important feature of this engine and it will be seen from Fig 1 that the lean air/fuel mixture flows through the two inlet valves (12) on the left of the figure in a symmetrical barrel or vortex pattern which persists during compression and is thus easily ignited by the jet of flame emitted from the small chamber through the said passage (10) thus shortening the flam propagation through the whole of the substantially homogeneous weak mixture of fuel and air.

A disadvantage of lean burn systems is that at air/fuel ratios of circa 20/1 considerable power is lost in comparison with the engine's capability when running at richer air/fuel ratios. This makes acceleration difficult and reduces hill climbing ability. This disadvantage is overcome in the total preferred system by controlling the fuel supply such as when required for maximum power the management system controls the fuel system to enrich the mixture in the combustion chamber to stoichiometric. It is held at this ratio as long as required by a "Lambda" sensor housed in the exhaust gas which senses stoichiometric air/fuel ratio and feeds back an electric signal to the Electronic Control Unit (ECU) which signals the fuel system appropriately.

When an engine is running near stoichiometric air/fuel ratio nitric oxide emissions are unacceptably high but this disadvantage is overcome by using a 3-way catalyst in the exhaust which promotes the reaction of the nitric oxide to harmless nitrogen by its reaction with the small amount of carbon monoxide, hydrogen and water vapour also present. Additionally when the engine is running in the leanburn phase the catalyst oxidizes the remaining carbon monoxide and hydrocarbons to carbon dioxide and water.

It will be appreciated that it is difficult to get satisfactory combustion with the lean mixtures associated with a wide open throttle. With conventional spark ignition engines air and fuel are reduced together by closing the throttle. This however puts up the pumping losses and thus reduces efficiency. With this invention, like a diesel engine, full throttle running is maintained as long as possible over the load speed range. Additionally in the conventional 3-way catalyst system, as the mixture is stoichiometric, the production of nitric oxide in the combustion is high. It has been found that with a combustion chamber system similar to that shown in Figs 1 and 2 the throttle may be maintained fully open to at least, half engine load. This desirable situation is due to the high intensity ignition flame penetrating the very lean mixture in the main chamber.

Below half load a small amount of throttling is found to be desirable to maintain smooth running, a large amount of throttling is only required for the so called 'tick-over' condition namely when the engine is unloaded.

Under these conditio s little nitric oxide is produced.

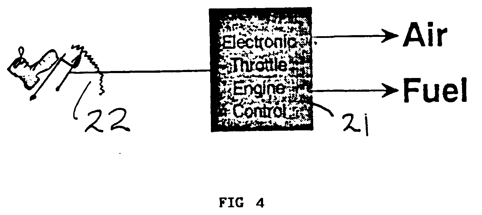

For the above control it is a desirable feature of this engine to have a sophisticated engine/fuel management system Fig 3. This system allows air and fuel to be separately controlled, metered and optimized for minimum pollution and required power. Preferably in this system the throttle for the air flow is not directly connected to the so called acceleration pedal in a vehicle. Such a system is frequently termed 'drive-by-wire' management system. A minimum requirement is that an electronic air control (18) can signal the operation of the air throttle (19); simultaneously the fuel supply (20) is controlled to give the required amount of fuel. This is normally achieved by means of an ECU (21). In use the ECU sends a signal to the electrically controlled throttle to maintain it in a fully open position until with reduced load some closing is required to prevent misfire. The fuel is controlled simultaneously from a pre-determined map to obtain the desired load and speed with the engine receiving a lean but homogeneous mixture. In a vehicle the desired load and speed is determined by the driver depressing a pedal controlling on electric potentiometer (22) instead of a direct connection to the throttle. The potentiometer sends an appropriate signal to the ECU, which is also sensing speed from an engine driven tachometer. For full load running the driver depresses the accelerator pedal further which signals the system to enrich the mixture for the full power range Fig 4.

The ECU (21) can conveniently control the ignition timing (23). Fig 3 also shows the 3-way catalyst (24) and the Lambda Sensor (25).

Although the preferred and optimum orientation is for a 4 valve lay-out of the cylinder head, it is also possible with the two inlet valves and one exhaust.

The description above is applied to a 4 stroke spark ignition engine. A similar system is also claimed for engines running on the two stroke cycle.

In this case the inlet or exhaust valves are replaced by a port or ports in the cylinder near the bottom of the stroke and are controlled by the piston as in a uniflow scavanged type of two stroke engine. With this system it is desirable but not essential that the small pre-chamber be also scavenged by supplying the pre-chamber with a rich mixture of air and fuel through a small valve rather than supplying fuel alone. On the compression stroke the pre-chamber also receives lean mixture via the main chamber and an easily ignitable charge is obtained in the pre-chamber at the time of the spark arrival as in the four stroke engine.

Although the invention is orientated particularly for vehicles using petrol it is also capable with minor modifications of gas flow and spray pattern into the pre-chamber to obtain ignition by using a high energy ignition system to run a wide cut petroleum fuel, such as aviation fuel, or similar or even diesel fuel, though with this a pre-chamber fuel supply of petrol rather than diesel fuel is an advantage. Additionally the main chamber is supplied from a conventional diesel type fuel injection system.

This latter system falls into the category of'spark-assisted diesel engine' but has the novel pre-chamber combustion system as described for the petrol engine.

The above description describes the operation of a single cylinder. For a vehicle engine multicylinder forms would normally be used, commonly 4, 6, or 8.

## Claims

1. A spark ignition piston engine with a combustion chamber consisting of a main chamber connected to a pre-chamber of approximately 5% of the main chamber volume, substantially spherical and situate at the apex or crown of the main chamber and having at its periphery a sparking plug and a device for the feeding in of fuel or an enriched fuel/air mixture, the main chamber being connected to the pre-chamber by a small channel, the said main chamber being fed with fuel and air mixture as near homogeneous as practical through two inlet valves and exhausted through one or more further valves, the chamber being shaped in a roughly penthouse or part spherical form between the cylinder head and the piston crown.

2. A piston engine according to Claim 1 but having a pre-chamber not exceeding 10% of the volume of the main chamber.

3. A piston engine according to Claims 1 or 2, in a particular application, as a four stroke spark ignition engine with two inlet valves and two exhaust valves.

4. A piston engine according to Claim 3 but with only one exhaust valve of larger diameter than those in Claim 3 and located in a plane that passes through the centre line of the cylinder and between the two inlet valves.

5. A piston engine as claimed in any of the Claims 1 to 4 but with a drive-by-wire engine control system operating an electrically operated throttle and fuel system to provide a substantially homogeneous air/fuel supply to the main combustion chamber so as to enable full throttle operation from full power ranging to lower power until some throttling is required for low power conditions.

6. A piston according to any of the Claims 1 to 5 but including a 3-way catalyst in the exhaust system in order to reduce pollutant gases to a minimum when full power is required under stoichiometric fuel/air ratio conditions.

7. A piston engine according to Claims 1 to 6 but with the engine orientated for a two stroke configuration of a uniflow scavange pattern for scavanging the cylinder and providing a fresh charge; this chamber being scavenged through the two inlet valves in the cylinder head and with the exhaust taking place at the lower end of the cylinder through ports controlled by the piston near the bottom of its stroke; with the pre-chamber orientated substantially as in Claim 1.

8. A piston engine according to any of the claims 1 to 6 but with the engine orientated for a two stroke uniflow scavenging system with the inlet valves being replaced with inlet ports at the bottom of the cylinder controlled by the piston movement and being so orientated as to produce two vortices in a similar manner to two inlet valves.

9. A piston engine as claimed in any of the Claims 1 to 8 but using a wide-cut petroleum and an enhanced spark energy.

10. A piston engine according to any of the Claims 1 to 8 but using diesel fuel with a separate fuel supply to the small chamber and including a conventional diesel injection system for the main chamber or with petrol for the pre-chamber.

## Amended claims

### Amended claims in accordance with Rule 86(2) EPC.

A spark ignition piston engine with a main combustion chamber of penthouse or part-spherical form connected by a passage to a pre-chamber having a volume not exceeding 10% of the main combustion chamber volume, the main combustion chamber being fed with a homogeneous fuel/air mixture through two valve-controlled inlet ports so directed as to produce a tumble flow of mixture in the main combustion chamber, the pre-chamber having a spark plug and a device feeding fuel or a rich fuel/air mixture into the pre-chamber, and the passage connecting the chambers having an outlet at the main chamber on the cylinder axis so that burning fuel/air mixture from the passage enters the tumble flow in the main chamber.

A four-stroke engine according to Claim 1 having a pre-chamber of approximately 5% of the volume of the main chamber and with two valve-controlled exhaust ports on the opposite side of the main chamber from the two valve-controlled inlet ports.

A two-stroke engine according to Claim 1 with piston-controlled exhaust ports.

A piston engine as claimed in any of Claims 1 to 3 with a drive-by-wire control system operating an electrically operated throttle valve and fuel system to provide a variable air/fuel ratio supply to the main combustion chamber so as to enable full throttle operation from full power output down to a low power output.

A piston engine according to any of the Claims 1-4 but including a 3-way catalyst in the exhaust system in order to reduce pollutant gases to a minimum when full power is required under stoichiometric fuel/air ratio conditions and oxidizing hydrocarbons and carbon monoxide under lean-burn conditions.

A piston engine substantially as described herein with reference to Fig 1-4 of the accompanying drawings.
